Europäisches Patentamt

European Patent Office

Office européen des brevets

(19)

(11) Publication number: **0 060 680**
**B1**

(12) **EUROPEAN PATENT SPECIFICATION**

(45) Date of publication of patent specification: **01.03.89**

(21) Application number: **82301223.2**

(22) Date of filing: **10.03.82**

(51) Int. Cl.⁴: **A 23 K 1/00**, A 23 K 1/20, A 23 K 1/17

(54) **Process for formulating a medicated animal feed premix.**

(30) Priority: **13.03.81 US 243282**

(43) Date of publication of application:
**22.09.82 Bulletin 82/38**

(45) Publication of the grant of the patent:
**01.03.89 Bulletin 89/09**

(84) Designated Contracting States:
**AT BE CH DE FR IT LI LU NL SE**

(56) References cited:
**EP-A-0 041 114**
**DE-A-2 540 509**
**US-A-3 579 719**
**US-A-4 048 268**

(73) Proprietor: **ELI LILLY AND COMPANY**
**307, East McCarty Street**
**Indianapolis Indiana 46285 (US)**

(72) Inventor: **Ludwig, Nelson Henry**
**R.R.8 Box 229**
**Greenfield Indiana 46140 (US)**

(74) Representative: **Tapping, Kenneth George et al**
**Lilly Industries Limited Patent Department Erl**
**Wood Manor**
**Windlesham Surrey, GU20 6PH (GB)**

The file contains technical information
submitted after the application was filed and
not included in this specification

Courier Press, Leamington Spa, England.

**Description**

The present invention relates to a method of formulating a medicated animal feed premix comprising a synthetic drug, carrier and binder, for the purpose of reducing carryover of the synthetic drug to subsequent lots of animal feed processed in the feed mill.

Cromwell, in Animal Nutrition and Health, May 1979, pages 6 and 7, discusses the formulation of animal feed premixes containing sulfa drugs such as sulfamethazine by milling the drugs in an animal feed mill. He discloses that when sulfamethazine is formulated in this manner carryover of the sulfamethazine into subsequent batches of feed not intended to contain medication occurs, thus leading to the unintentional cross-contamination of the non-medicated feed with sulfamethazine.

Ludwig, in U.S. Patent No. 4,048,268, teaches substantially the same process used in the present invention. The purpose of that invention was, however, related to a method of stabilizing the microorganism produced antibiotic tylosin, which is susceptible to deterioration causing a considerable loss of potency, but having no carryover problem.

The apparatus typically used in the process of the present invention is disclosed in U.S. Patent No. RE27214, or U.S. Patent No. 3,579,719. These patents teach the use of that apparatus for making spherical granules.

This invention provides a method of formulating a drug or a physiologically-acceptable salt thereof as a medicated animal feed premix, such method comprising the steps of:

A. forming a moist but free flowing particulate material having an overall moisture content of from 43 to 50 per cent by weight by intimately blending a mixture of the synthetic drug, a finely ground physiologically-acceptable carrier and water to form an intimate admixture, and optionally blending said intimate admixture with a physiologically-acceptable binder in an amount of up to 10 per cent on a dry weight basis;

B. extruding the blend of (A) under pressure through round perforations of from 0.5 mm to 1.5 mm in diameter, forming an extrudate of elongated strands having a length exceeding the cross-sectional dimension;

C. reducing the strands of extrudate (B) into particles of from 1.0 to 2.5 times their cross-sectional dimension in length;

D. drying the particles from (C) at a temperature ranging from room temperature to 70°C to a residual moisture content of from 5 to 12 percent; and

E. passing the dried particles from (D) over meshed wire screens to remove granules greater than 20 mesh and less than 80 mesh, yielding particles in size from 0.85 mm to 0.18 mm in diameter; characterised in that the drug is sulfamethazine or nicarbazin and the premix produced has reduced potential for carryover of the drug.

The remaining uniform particles are termed "minigranules".

The term "feed premix", as used in the present application, is defined as thhe synthetic drug, in the form of the minigranule alone or, more typically, diluted with a suitable edible diluent. Either type of premix is intended to be further diluted with the animal ration, and the final feed mixture obtained then may be formed into pellets, if desired.

The carrier used in the first step of the present process can be any physiologically-acceptable carrier. Suitable physiologically-acceptable carriers include finely-divided materials derived from cereal grains; oil seeds and their by-products; forages, silages, and their by-products; by-products of the lumber, sugar, fruit juice, and vegetable juice industries; clays such as diatomaceous earth; and vermiculite. Because of their widespread availability, solvent-extracted soybean feed, soybean mill run, corn flour, milo flour, wheat middlings, or alfalfa meal are preferred. Especially preferred carriers for use in this novel process include solvent-extracted soybean feed, corn flour, and alfalfa meal, with the carrier of choice being solvent-extracted soybean feed. The carrier is suitably used in from 50 to 98 percent on a dry weight basis to form the admixture.

Physiologically-acceptable binders found useful in preparing the admixture include starch, gelatin, polyvinylpyrrolidone, soy protein, cellulose, bentonite, acacia powder and lignin sulfonate. Of these, starch is the binder of choice. However, as noted below in Example 5, it is not always necessary to add a separate binder since another component may additionally serve as a binder. The binder may be present in up to 10 percent by weight of the admixture on a dry weight basis, preferably from 3 to 5 percent by weight on a dry weight basis.

The exact percentage of the synthetic drug in minigranules prepared according to the present invention will vary somewhat with the identity of carrier and other factors. Generally, the minigranules will contain from 1 to 40 percent of the synthetic drug on a dry weight basis. Where the carrier is solvent-extracted soybean feed or alfalfa meal, the full range of 1 to 40 percent is possible. However, with certain other carriers, less than 40 percent of the synthetic drug is possible. For example, those minigranules prepared using a carrier selected from the group consisting of corn flour, milo flour, soybean mill run, and wheat middlings, can contain from 1 to 25 percent of the synthetic drug on a dry weight basis. These differences in percent weight content of the drug are due in part to the variation in ability of the carriers to absorb moisture and to thereby form a suitable admixture for processing through the extruder and thence to the forming of the minigranules from the strands of extrudate.

The percent of synthetic drug, physiologically-acceptable carrier, and binder is calculated on a dry weight basis and is considered without reference to the water or other components present. Thus, these three components together constitute 100 percent of the composition for purposes of calculating individual percentages.

The process of the present invention used to control the carryover of a synthetic drug is described in detail below.

In step (A) of the proces, the synthetic drug, or a suitable physiologically-acceptable salt thereof, a suitable carrier, and some water, are blended together in a blender. Suitable type blenders include a ribbon blender, tumbling cone, twin shell blender, vertical mixer, paddle mixer, sigma arm mixer, pony mixer, or the like. Preferably, the mixing is done in a ribbon blender. Although unnecessary in production type equipment, it may be desirable in pilot plant equipment to empty the ribbon blender into a suitable container, and the sides, bottom and blades of the ribbon blender be scraped clean. All of the material is then returned to the blender for additional mixing.

The optional binder, usually along with some water, is added to the admixture in the blender and mixing continued for as long a time as necessary to provide intimate mixing of the various components with one another. The amount of binder required is calculated on a dry weight basis and is up to 10 percent by weight, preferably from 3 to 5 percent by weight of the components.

It has been found that reasonably prolonged mixing does not adversely affect the properties of the material being blended for processing in the extruder, the next step in the process. At the conclusion of this mixing, the mixture appears as a moist but free-flowing particulate material which forms a dough when compressed. This moist but free-flowing particulate material may have an overall moisture content of from 43 to 50 percent by weight, most typically and preferably about 47 percent by weight.

The admixture prepared as described above is next introduced into an extruder. Extruders are well known to the art. Generally, the material to be extruded is fed into a hopper over one end of a rotating screw auger disposed in a cylinder. The screw auger transports the material to be extruded the length of the cylinder and discharges said material into an annular space defined on one or more sides by a perforated plate. The material is forced through the perforations of the plate by the pressure created by transporting more of said material into said annular space than can be confined therein. The faster the material accumulates in the annular space, the greater the pressure being exerted to force said material through the perforations in said plate.

The screen or perforated plate through which the admixture is extruded suitably contains round perforations of from 0.5 mm to 1.5 mm in diameter. The perforation diameter of choice in the plate is 0.8 mm. This diameter size of extrudate results in a range of particle sizes which is most useful for uniform distribution in animal feeds.

The elongated strands of extrudate produced by the extruder will vary in length from something a little more than the cross sectional dimension to a measurement many times the breadth of said strand. The length of strands will vary with the relation of the perforated plate to the vertical. A plate set on the vertical will form strands having a shorter length than those coming from a plate facing down. Furthermore, the cross sectional dimension of the perforations also influences the length of the strands. In any event, the strands of extrudate do not tend to stick together under normal handling and can be spread on trays for drying or added directly to a particle-forming apparatus without encountering aggregation, agglomeration, coalescence, or disintegration.

While it is possible to remove the excess moisture from the strands of extrudate prior to forming the minigranules, it is preferred in the present process that such particles must be formed before the excess moisture is removed. The extrudate strands are therefore divided into particles, the length of which particles varies from 1.0 to 2.5 times their cross-sectional dimension.

The division of the extrudate strands into short lengths is accomplished by contacting the strands with a moving frictional plate, said plate being of either a flat or curved form and having either a smooth or serrated surface, preferably the latter, said frictional plate moving at a velocity sufficient to overcome the inertia of said extrudate. The moving frictional plate sets up a rolling, tumbling bed of extrudate and in such bed, the elongated strands are divided into particles of from 1.0 to 2.5 times their cross-sectional dimension in length. Illustrative of devices wherein this operation can be performed are: (a) coating pans used in pharmaceutical and confectionary industries and well known in the art, which pans can be operated satisfactorily whether set in a vertical plane or tilted at an angle; (b) granulating pans, also well known in the art, such as those used in pelletizing "taconite" iron ore for shipment and characterized by being of large diameter and with a relatively low integral circumferential side wall confining the particles on the flat surface (these pans are generally operated at a slight angle, perhaps 15° off the horizontal and are rotated slowly); (c) an apparatus for dividing moist plastic extrusions into short lengths, comprising a stationary vertical cylindrical container having a rotatable flat or outwardly curved circular frictional plate disposed therein, said plate being disposed on a shaft at approximately a right angle thereto, such device being the subject of U.S. Patent No. RE27214, or U.S. Patent No. 3,579,719.

Preferably, the extrudate reduction is accomplished using the device of (c) above by: (1) contacting said extrudate with a circular frictional plate mounted horizontally in a vertically disposed stationary cylindrical vessel; (2) rotating said plate at a speed sufficient to overcome the inertia of said extrudate; (3) imparting velocity to said extrudate such that said extrudate moves in a curved path toward the periphery of said plate; (4) establishing a moving doughnut-shaped ring of said extrudate; and (5) continuing such movement until said extrudate is reduced to particles of from 1.0 to 2.5 times their cross-sectional dimension in length. The circular frictional plate is suitably operated at speeds ranging from 1200 to 1800 rpm.

The minigranules produced in the previous step are dried until they contain from 5 to 12 percent, preferably about 10 percent residual moisture.

The drying operation can be suitably accomplished by spreading said particles on trays and air drying at room temperature; by kiln drying at temperatures up to about 70°C; or by loading said particles into a fluidized-bed dryer and blowing warm (approximately 70°C) dry air through the fluidized bed of said particles, this latter being the method preferred.

The final step in this carryover control method is the necessity to pass the dried minigranules over meshed wire screens to remove granules greater than 20 mesh and less than 80 mesh. The acceptable particles collected will range in size from 0.85 mm to 0.18 mm in diameter.

The dust-free minigranules containing the synthetic drug now possess the proper characteristics to greatly reduce the problem of carrying over the drug to subsequent feed lots.

The process of the present invention may be used not only for a synthetic drug alone, and its physiologically-acceptable salts, but also for synthetic drugs in combination with fermentation derived anti-biotics.

The following examples further illustrate this invention.

Example 1

Finely ground solvent-extracted soybean feed (carrier), 918 g, was put into a small ribbon mixer and combined with 375 g sulfamethazine powder. To 873 ml water was added the mixture and the mixer was run for about 10 minutes. The mixer was emptied into a suitable container and the sides, bottom and blades of the mixer were scraped clean. All of the material was then returned to the mixer for an additional 10 minutes of mixing.

A binder was prepared by mixing 68 g starch with 68 ml cold water and then adding 272 ml boiling water while stirring. This procedure provided adequate and uniform hydrolysis of the starch. The hydrolyzed starch was then added to the material in the mixer, and 15 minutes of mixing was carried out. At the end of the mixing time, the mixture appeared as a moist but free-flowing particulate material which formed a dough when compressed. The mixture had a moisture content of about 47 percent.

Using an EXD—60 double screw extruder, this free-flowing particulate material was extruded through 0.8 mm round perforations into elongated strands.

The elongated strands of extrudate were removed from the extruder and contacted with a circular frictional plate mounted horizontally in a vertically disposed stationary cylindrical vessel. The plate was rotated at a speed of about 1800 rpm, imparting a velocity to the extrudate sufficient to overcome the inertia of said extrudate and to establish a moving doughnut-shaped ring of said strands of extrudate. The rotational movement was continued for about 30 seconds, or until said strands of extrudate were divided into particles of from 1.0 to 2.5 times their cross-sectional dimension in length. The particles were then removed and dried in a fluid-bed type dryer at a temperature of up to 60°C, over a period of about 15 minutes. The particles, or minigranules, after drying, had a moisture content of about 10 percent.

The particles containing sulfamethazine were finally passed over 20 and 80 mesh wire screens. This gave acceptable particles ranging in size from 0.85 mm to 0.18 mm in diameter containing sulfamethazine at a rate of about 125 g of sulfamethazine per pound.

Example 2

2082 g solvent-extracted soybean feed was added to a ribbon mixer along with 3397 g tylosin phosphate concentrate and 1500 g sulfamethazine powder. To this was added 1699 ml water and the mixer was run for about 10 minutes. The mixer was emptied and scraped clean. All of the material was then returned to the mixer for an additional 10 minutes of mixing.

The binder was prepared by mixing 163 g starch powder with 163 ml water at room temperature and then adding 652 ml boiling water. This material was added to the material in the mixer and an additional 15 minutes of mixing was performed. After mixing, the mixture appeared as a moist but free-flowing particulate material with a moisture content of 45%.

Using an EXD—60 double screw extruder, the free-flowing particulate was then extruded through 0.5 mm round perforations into elongated strands.

The elongated strands of extrudate produced were contacted with a circular frictional plate mounted horizontally in a vertically disposed stationary cylindrical vessel. The plate was rotated at a speed of about 1800 rpm, imparting a velocity to the extrudate sufficient to overcome the inertia of said extrudate and to establish a moving doughnut-shaped ring of said strands of extrudate. The rotational movement was continued for about 30 seconds or until said strands of extrudate were divided into particles of from 1.0 to 2.5 times their cross-sectional dimension in length. The particles were then removed and dried in a fluid-bed dryer at about 50°C for 30 minutes. The dried minigranules were sieved through 20 mesh and 80 mesh wire screens, said particles then containing tylosin and sulfamethazine at a rate of about 125 g of each per pound (275 g/kg).

## Example 3

To a large ribbon mixer was added 6.659 kg solvent-extracted soybean feed with 2.841 kg sulfamethazine and 6.368 l of water. The mixer was run for about 10 minutes, emptied and scraped clean. All of the material was then returned to the mixer for an additional 10 minutes of mixing.

The binder was prepared by mixing 500 g of starch with 500 ml water at room temperature and then adding 2 l of boiling water while stirring. The binder was then added to the material in the mixer and mixed for about 15 minutes. At the end of the mixing time, the mixture appeared as a moist but free-flowing particulate material which formed a dough when compressed. The mixture had a moisture content of about 47 percent.

Using an EXD—60 double screw extruder, this free-flowing particulate material was extruded through 0.8 mm round perforations into elongated strands.

The elongated strands of extrudate were removed from the extruder and contacted with a circular frictional plate mounted horizontally in a vertically disposed stationary cylindrical vessel. The plate was rotated at a speed of about 1800 rpm, imparting a velocity to the extrudate sufficient to overcome the inertia of said extrudate and to establish a moving doughnut-shaped ring of said strands of extrudate. The rotational movement was continued for about 20 seconds, or until said strands of extrudate were divided into particles of from 1.0 to 2.5 times their cross-sectional dimension in length. The particles were then removed and dried in a fluid-bed type dryer at a temperature of up to 70°C, over a period of about 15 minutes. The particles, or minigranules, after drying, had a moisture content of about 10 percent. These minigranules were finally passed over 20 mesh and 80 mesh wire screens to yield acceptable particles in the size range from 0.85 mm to 0.18 mm in diameter. The minigranules contained sulfamethazine, as determined by assay, at a rate of 136.2 g per pound (300 g/kg) (theoretical rate 125 g per pound (275 g/kg)).

## Example 4

A 9.988 kg quantity of solvent-extracted soybean feed was added to a ribbon mixer. To this was added 4.262 kg sulfamethazine and 9.552 l of water and the mixer was run for about 10 minutes, emptied and scraped clean. All of the mixture was then put back into the bowl and mixed for an additional 10 minutes.

A binder was prepared by slurrying 750 g starch in 750 ml water at room temperature, and then adding 3 l boiling water and stirring. The hydrolyzed starch was then added to the material in the mixer, and mixing was carried out for 15 minutes. This dough, following mixing, had a moisture content of 47 percent.

The free-flowing particulate material, or dough, was extruded using an EXD—60 double screw extruder. The dough was extruded through 0.8 mm round perforations into elongated strands.

The elongated strands of extrudate were removed from the extruder and contacted with a circular frictional plate mounted horizontally in a vertically disposed stationary cylindrical vessel. The plate was rotated at a speed of about 1800 rpm, imparting a velocity to the extrudate sufficient to overcome the inertia of said extrudate and to establish a moving doughnut-shaped ring of said strands of extrudate. The rotational movement was continued for about 20 seconds, or until said strands of extrudate were divided into particles of from 1.0 to 2.5 times their cross-sectional dimension in length. The particles were then removed and dried in a fluid-bed type dryer at a temperature of up to 70°C, over a period of about 15 minutes. The minigranules at this point had a moisture content of 10 percent. The particles were then sieved using 20 mesh and 80 mesh wire screens giving acceptably sized particles containing sulfamethazine, as determined by assay, at a rate of 130.4 g per pound (287 g/kg) (theoretical rate 125 g per pound (275 g/kg)).

## Example 5

To a small ribbon mixer was added 310 g of a dried mycelial cake containing monensin, 50 g nicarbazin and 15 g mineral oil and was mixed until the oil was uniformly dispersed. To this mixture was added 125 g solvent-extracted soybean feed and 195 ml water, mixed for 10 minutes, emptied and scraped clean. A binder is not necessary in this minigranule because of the natural consistency of the mycelial cake. The mixture had a moisture content of about 28 percent.

Using an EXD—60 double screw extruder, this free-flowing particulate material was extruded through 0.8 mm round perforations into elongated strands.

The elongated strands of extrudate were removed from the extruder and contacted with a circular frictional plate mounted horizontally in a vertically disposed stationary cylindrical vessel. The plate was rotated at a speed of about 1800 rpm, imparting a velocity to the extrudate sufficient to overcome the inertia of said extrudate and to establish a moving doughnut-shaped ring of said strands of extrudate. The rotational movement was continued for about 20 seconds, or until said strands of extrudate were divided into particles of from 1.0 to 2.5 times their cross-sectional dimension in length. The particles were then removed and dried in a fluid-bed type dryer at a temperature of 60°C. The minigranules were finally passed over 20 mesh and 80 mesh wire screens to yield acceptable particles in the size range from 0.85 mm to 0.18 mm in diameter. The minigranules contained nicarbazin and monensin at a rate of about 100 g per kilogram each.

## Cross Contamination Study

A trial was conducted at a noncommercial feed mill to compare the unintentional contamination of non-medicated feedstuffs by two tylosin-sulfamethazine premixes.

Formulation A comprises a portion of a commercial tylosin-sulfamethazine premix, referred to as Tylan 40 Sulfa Premix. This formulation was prepared by combining tylosin, as prepared by the process described by Ludwig in U.S. Patent No. 4,048,268 (used to impart stability to the antibiotic), hereafter referred to as granulated tylosin concentrate, and untreated sulfamethazine powder. Formulation B was prepared by mixing granulated tylosin concentrate, identical to that in formulation A, and sulfamethazine, as prepared in Examples 3 and 4 of the present application, referred to as granulated sulfamethazine. Each formulation was diluted with fine rice hulls and antidusting oil which gave premixes with tylosin and sulfamethazine concentrations of about 40 g per pound (88 g/kg) each. Table 1 gives the ingredients of the two premixes evaluated in the cross contamination study.

TABLE 1

| Sulfamethazine Powder Premix | Amount Used (kg) |
| --- | --- |
| Granulated tylosin concentrate | 7554.5 |
| Sulfamethazine powder | 2349.65 |
| Fine rice hulls | 13608.0 |
| Spray oil (coparaffinate) | 306.3 |

| Granulated Sulfamethazine Premix | Amount Used (kg) |
| --- | --- |
| Granulated tylosin concentrate | 15.78 |
| Granulated sulfamethazine (from Example 3 at 136.2 g/lb (300 g/kg)) | 7.09 |
| Granulated sulfamethazine (from Example 4 at 130.4 g/lb (287 g/kg)) | 6.98 |
| Fine rice hulls | 14.61 |
| Antidusting oil | 0.907 |

Each premix was then added to 3 separate quantities of swine feed. Each lot of medicated swine feed weighed 3000 lbs (1360 kg) and gave a concentration of 100 g/ton (110 ppm) of tylosin and sulfamethazine in the 3 lots of medicated swine feed formulated with sulfamethazine powder and the 3 lots of medicated swine feed formulated with granulated sulfamethazine. An unmedicated lot of swine feed was analyzed to determine the background level of sulfamethazine in it, as well.

The seven 3000 lb (1360 kg) lots of swine feed were mixed, conveyed, pelleted and bagged according to normal mill procedures. After each lot of medicated swine feed was mixed, the horizontal paddle mixer was opened and the remaining feed was removed. The whole system was then flushed with 1000 lb (454 kg) of a 80% ground corn — 20% sugar beet pulp mixture (flush). This was then mixed, pelleted and bagged in the same way as the feed. Ten samples were taken from each lot, one from every sixth 50 lb (22.7 kg) bag of medicated feed, and one from every other 50 lb (22.7 kg) bag of flush. Flush samples were assayed for sulfamethazine by the modified Brattan-Marshall method while feed samples were assayed by the method described by Tishlor in J. Agr. Food Chem. 16 (1):50—53.

Table 2 summarizes the sulfamethazine assays for this trial. The Bratton-Marshall assay, used to detect low levels of sulfamethazine, can be used to quantify levels of less than 1 ppm. The background sulfamethazine levels (as measured in the unmedicated feeds and flushes) ranged from 0.06 to 0.30 ppm, and levels of sulfamethazine below 0.5 ppm are considered indistinguishable from background levels. The sulfamethazine persistence ratio (SPR) expresses the amount of sulfamethazine carried over to the unmedicated flush as a percentage of the sulfamethazine in the medicated animal feed preceding it.

$$SPR = \frac{\text{g sulfamethazine in unmedicated flush}}{\text{g sulfamethazine in medicated animal feed lot}} \times 100\%$$

Comparison of the SPR for the two formulations shows that carryover of sulfamethazine into unmedicated materials was reduced by 54% with the use of granulated sulfamethazine as prepared by the method described in the present invention.

TABLE 2

| Formulation | Animal Feed No. | Feed Assays | | Flush Assays | | Sulfa-methazine Persistence Ratio (%) |
|---|---|---|---|---|---|---|
| | | Sulfa-methazine Av. g/ton (g/908 kg) | Sulfa-methazine g/3000 lb lot (g/1360 kg) | Sulfa-methazine g/ton (g/908 kg) | Sulfa-methazine g/1000 lb lot (g/454 kg) | |
| Unmedicated | 1 | <1 | | <1 | | |
| Sulfamethazine Powder | 2 | 91.6 | 137.4 | 2.4 | 1.2 | 0.87 |
| | 3 | 95.1 | 142.6 | 3.2 | 1.6 | 1.12 |
| | 4 | 92.3 | 138.5 | 2.8 | 1.4 | 1.01 |
| | Average | 93.0 | 139.5 | 2.8 | 1.4 | 1.00 |
| Granulated Sulfamethazine | 5 | 102.1 | 153.2 | 1.2 | 0.60 | 0.39 |
| | 6 | 91.9 | 137.9 | 1.3 | 0.66 | 0.48 |
| | 7 | 107.4 | 161.1 | 1.6 | 0.80 | 0.50 |
| | Average | 100.4 | 150.6 | 1.4 | 0.69 | 0.46 |

**Claims**

1. A method of formulating a drug or a physiologically-acceptable salt thereof as a medicated animal feed premix, such method comprising the steps of:

A. forming a moist but free flowing particulate material having an overall moisture content of from 43 to 50 per cent by weight by intimately blending a mixture of the synthetic drug, a finely ground physiologically-acceptable carrier and water to form an intimate admixture, and optionally blending said intimate admixture with a physiologically-acceptable binder in an amount of up to 10 per cent on a dry weight basis;

B. extruding the blend of (A) under pressure through round perforations of from 0.5 mm to 1.5 mm in diameter, forming an extrudate of elongated strands having a length exceeding the cross-sectional dimension;

C. reducing the strands of extrudate (B) into particles of from 1.0 to 2.5 times their cross-sectional dimension in length;

D. drying the particles from (C) at a temperature ranging from room temperature to 70°C to a residual moisture content of from 5 to 12 percent; and

E. passing the dried particles from (D) over meshed wire screens to remove granules greater than 20 mesh and less than 80 mesh, yielding particles in size from 0.85 mm to 0.18 mm in diameter; characterised in that the drug is sulfamethazine or nicarbazin and the premix produced has reduced potential for carryover of the drug.

2. The method of Claim 1 wherein the drug is sulfamethazine.

3. The method of Claim 1 wherein the drug is nicarbazin.

4. The method of Claim 1 wherein the premix additionally comprises a fermentation derived antibiotic, or a physiologically-acceptable salt thereof.

5. The method of any one of Claims 1 to 4 wherein the carrier is solvent-extracted soybean feed.

6. The method of any one of Claims 1 to 4 wherein the carrier is alfalfa meal.

7. The method of any one of Claims 1 to 4 wherein the carrier is soybean mill run.

8. The method of any of Claims 1 to 7 wherein the binder is hydrolyzed starch.

9. The method of any one of Claims 1 to 8 wherein the reduction of the strands of extrudate into particles is accomplished by contacting said extrudate with a circular frictional plate mounted horizontally in a vertically disposed stationary cylindrical vessel; rotating said plate at a speed of from 1200 to 1800 rpm to overcome the inertia of said extrudate; imparting velocity to said extrudate such that said extrudate moves in a curved path toward the periphery of said plate; establishing a moving doughnut-shaped ring of said extrudate; and continuing such movement until such extrudate is reduced to particles of from 1.0 to 2.5 times their cross-sectional dimension in length.

10. A feed mill operation wherein a medicated animal feed premix containing sulfamethazine or nicarbazin is mixed with a suitable feed ration, characterized in that, to reduce carryover of the sulfamethazine or nicarbazin, the medicated animal feed premix is one prepared by the process of any one of claims 1 to 9.

## Patentansprüche

1. Verfahren zur Formulierung eines Wirkstoffes oder eines physiologisch annehmbaren Salzes hiervon zu einer wirkstoffhaltigen Futtervormischung für Tiere durch

(A) Bildung eines feuchten aber frei fließenden stückigen Materials, das einen gesamten Feuchtigkeitsgehalt von 43 bis 50 Gewichtsprozent aufweist, durch gründliche Vermischung eines Gemisches aus dem synthetischen Wirkstoff, einem fein gemahlenen physiologisch annehmbaren Träger und Wasser und gegebenenfalls Vermischung des erhaltenen innigen Gemisches mit einem physiologisch annehmbaren Bindemittel in einer Menge von bis zu 10 Prozent auf einer Trockengewichtsbasis,

(B) Extrusion des Gemisches der Stufe (A) unter Anwendung von Druck durch runde Perforationen mit einem Durchmesser von 0,5 mm bis 1,5 mm unter Bildung eines Extrudats aus länglichen Strägen mit einer Längsabmessung, die größer als die Querschnittsabmessung ist,

(C) Zerkleinerung der Stränge des Extrudats der Stufe (B) zu Teilchen, deren Längsabmessung dem 1,0- bis 2,5-fachen ihrer Querschnittsabmessung entspricht,

(D) Trocknung der Teilchen der Stufe (C) bei einer von Raumtemperatur bis 70°C reichenden Temperatur auf einen restlichen Feuchtigkeitsgehalt von 5 bis 12 Prozent und

(E) Aufgeben der getrockneten Teilchen der Stufe (D) auf Drahtsiebe zwecks Entfernung von Granulaten, die größen als 0,85 mm (20 mesh) und kleiner als 0,18 mm (80 mesh) sind und zwecks Bildung von Teilchen mit einem Durchmesser von 0,85 bis 0,18 mm, dadurch gekennzeichnet, daß der synthetische Wirkstoff Sulfamethazin oder Nicarbazin ist und die hergestellte Futtervormischung über ein verringertes Ausmaß zur Übertragung des Wirkstoffs verfügt.

2. Verfahren nach Anspruch 1, dadurch gekennzeichnet, daß der Wirkstoff Sulfamethazin ist.

3. Verfahren nach Anspruch 1, dadurch gekennzeichnet, daß der Wirkstoff Nicarbazin ist.

4. Verfahren nach Anspruch 1, dadurch gekennzeichnet, daß die Vormischung zusätzlich ein durch Fermentation erhaltenes Antibiotikum oder ein physiologisch annehmbares Salz hiervon enthält.

5. Verfahren nach irgendeinem der Ansprüche 1 bis 4, dadurch gekennzeichnet, daß der Träger ein lösungsmittelextrahiertes Sojabohnenfutter ist.

6. Verfahren nach irgendeinem der Ansprüche 1 bis 4, dadurch gekennzeichnet, daß der Träger Luzernemehl ist.

7. Verfahren nach irgendeinem der Ansprüche 1 bis 4, dadurch gekennzeichnet, daß der Träger Sojabohnenmahlgut ist.

8. Verfahren nach irgendeinem der Ansprüche 1 bis 7, dadurch gekennzeichnet, daß das Bindemittel hydrolysierte Stärke ist.

9. Verfahren nach irgendeinem der Ansprüche 1 bis 8, dadurch gekennzeichnet, daß die Zerkleinerung der Stränge des Extrudats zu Teilchen durchgeführt wird durch Behandlung des Extrudats mit einer kreisförmigen Friktionsplatte, die horizontal in einem vertikal angeordneten stationären zylindrischen Behälter montiert ist, Rotation der Platte mit einer Geschwindigkeit von 1 200 bis 1 800 Umdrehungen pro Minute zwecks Überwindung der Trägheit des Extrudats, Beschleunigung des Extrudats zwecks Bewegung dieses Extrudats in einer gekrümmten Bahn zur Peripherie der Platte hin, bildung eines sich bewegenden krapfenförmigen Rings des Extrudats und Fortführung dieser Bewegung bis zur Zerkleinerung des Extrudats zu Teilchen, deren Längsabmessung dem 1,0- bis 2,5-fachen ihrer Querschnittsabmessung entspricht.

10. Verfahren zum Betrieb einer Futtermühle, in welcher ein Sulfamethazin oder Nicarbazin als Wirkstoff enthaltende Futtervormischung für Tiere mit einer geeigneten Futterration vermischt wird, dadurch gekennzeichnet, daß zwecks Erniedrigung des Ausmaßes an Übertragung des Wirkstoffes Sulfamethazin oder Nicarbazin eine nach dem Verfahren gemäß irgendeinem der Ansprüche 1 bis 9 hergestellte Futtervormischung für Tiere verwendet wird.

## Revendications

1. Procédé de formulation d'un médicament ou d'un de ses sels physiologiquement acceptables comme prémélange d'aliments médicamentés pour animaux, ce procédé comprenant les étapes consistant à:

A. former une matière en particules humide, mais s'écoulant librement, ayant une teneur totale en humidité de 43 à 50% en poids en mélangeant intimement un mélange du médicament synthétique, d'un support finement broyé physiologiquement acceptable et d'eau pour former un mélange intime, et facultativement mélanger ce mélange intime avec un liant physiologiquement acceptable en une quantité allant jusqu'à 10%, calculé sur une base pondérale sèche;

B. extruder le mélange obtenu sub (A) sous pression à travers des perforations circulaires d'un diamètre de 0,5 à 1,5 mm, formant ainsi un produit d'extrusion de boudins allongés ayant une longueur dépassant la dimension en section transversale;

C. réduire les boudins du produit d'extrusion obtenu sub (B) en particules d'une longueur égalant 1,0 à 2,5 fois leur dimension en section transversale;

D. sécher les particules obtenues sub (C) à une température se situant entre la température ambiante et 70°C jusqu'à une teneur en humidité résiduelle se situant entre 5 et 12%; et

E. faire passer les particules séchées obtenues sub (D) sur des tamis à mailles en fil métallique pour éliminer les granules d'une granularité supérieure à 20 mailles et inférieure à 80 mailles, pour obtenir ainsi des particules d'un diamètre de 0,85 à 0,18 mm; caractérisé en ce que le médicament est la sulfaméthazine ou la nicarbazine, tandis que le prémélange obtenu a un potentiel réduit pour le transport du médicament.

2. Procédé selon la revendication 1, caractérisé en ce que le médicament est la sulfaméthazine.

3. Procédé selon la revendication 1, caractérisé en ce que le médicament est la nicarbazine.

4. Procédé selon la revendication 1, caractérisé en ce que le prémélange comprend, en outre, un antibiotique dérivant d'une fermentation, ou un de ses sels physiologiquement acceptables.

5. Procédé selon l'une quelconque des revendications 1 à 4, caractérisé en ce que le support est un aliment de soya extrait par solvant.

6. Procédé selon l'une quelconque des revendications 1 à 4, caractérisé en ce que le support est de la farine de luzerne.

7. Procédé selon l'une quelconque des revendications 1 à 4, caractérisé en ce que le support est un mouture de soya.

8. Procédé selon l'une quelconque des revendications 1 à 7, caractérisé en ce que le liant est de l'amidon hydrolysé.

9. Procédé selon l'une quelconque des revendications 1 à 8, caractérisé en ce que la réduction des boudins du produit d'extrusion en particules est effectuée en mettant ce produit d'extrusion en contact avec une plaque circulaire de friction montée horizontalement dans un récipient cylindrique fixe disposé verticalement; faire tourner cette plaque à une vitesse de 1200 à 1800 tours/minute afin d'éviter l'inertie du produit d'extrusion; imprimer, à ce produit d'extrusion, une vitesse telle qu'il se déplace en un parcours courbe vers la périphérie de la plaque précitée; établir un anneau de ce produit d'étrusion sous forme d'une pastille en mouvement; puis poursuivre ce mouvement jusqu'à ce que le produit d'extrusion soit réduit en particules d'une longueur représentent 1,0 à 2,5 fois leur dimension en section transversale.

10. Opération de broyage d'aliments, dans laquelle un prémélange d'aliments médicamentés pour animaux contenant de la sulfaméthazine ou de la nicarbazine est mélangé avec une ration appropriée d'aliments, caractérisée en ce que, pour réduire le transport de la sulfaméthazine ou de la nicarbazine, le prémélange d'aliments médicamentés pour animaux est un prémélange préparé par le procédé selon l'une quelconque des revendications 1 à 9.